# EUROPEAN PATENT SPECIFICATION

(11) **EP 2 241 056 B1**
(45) Date of publication and mention of the grant of the patent: **27.06.2012**
(21) Application number: 08712775.9
(22) Date of filing: 04.02.2008
(51) Int. Cl.: H04W 84/18

(54) **CONFIGURATION OF A NODE IN A COMMUNICATIONS NETWORK**
KONFIGURATION EINES KNOTENS IN EINEM KOMMUNIKATIONSNETZWERK
CONFIGURATION D'UN NOEUD DANS UN RÉSEAU DE COMMUNICATIONS

(43) Date of publication of application: 20.10.2010
(73) Proprietor: Telefonaktiebolaget LM Ericsson (publ), 164 83 Stockholm (SE)
(72) Inventor: NIELSEN, Johan, S-753 24 Uppsala (SE)
(74) Representative: Norberg, Charlotte
(86) International application number: PCT/SE2008/050135
(87) International publication number: WO 2009/096835

(56) References cited:
- EP-A1- 1 903 816
- US-A1- 2006 203 746
- US-A1- 2007 104 173
- US-A1- 2007 213 086
- US-B1- 6 980 810
- ERICSSON: "On Automatic Neighbour Relation Configuration", 3GPP DRAFT; R3-071819 ANR DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sophia Antipolis, France; 20071003, 3 October 2007 (2007-10-03), XP050162619, [retrieved on 2007-10-03]

## Description

### TECHNICAL FIELD

The present invention relates to the field of communications network configuration in general, and in particular to the configuration of access network nodes in a communications network.

### BACKGROUND

Most existing mobile communications networks comprise a Radio Access Network (RAN) and a Core Network (CN). The RAN and the CN in turn comprise a number of communication nodes connected to each other in a hierarchical way.

So for example, in a standard GSM network, the RAN may comprise Base Stations (BSs) and Base Station Controllers (BSCs), while the CN may comprise Mobile Switching Centres/Visitor Location Registers (MSCs/VLRs) and a Gateway Mobile Switching Centre (GMSC) (for circuit switched networks), or Serving GPRS Support Nodes (SGSNs) and a Gateway GPRS Support Node (GGSN) (for packet-switched networks). In a standard UMTS network, the nodes corresponding to the BSs in a GSM network are called NodeBs, and the nodes corresponding to the BSCs are called Radio Network Controllers (RNCs).

These mobile communications networks can hence be regarded as hierarchical networks comprising a four level node architecture in which a BS or NodeB is connected to a BSC or RNC, which in turn is connected to a MSCNLR or SGSN, which finally is connected to a GMSC or GGSN. The bottom-level RAN node, such as the BS or NodeB, is arranged to communicate with the mobile communication devices (often referred to as Mobile Stations (MSs) in the context of GSM networks and User Equipment (UE) in the context of UMTS networks) within the network, while the top-level CN node, such as the GMSC or GGSN, is arranged to communicate with other networks.

In future generations of communications networks, there is a desire to reduce the number of hierarchical levels in the network architecture. That is, there is a desire to go from the multi-level hierarchical networks described above to communications networks having substantially "flat" network architectures. Examples of communications network standards under development having flatter network architectures than most network architectures of today, are Long Tenn Evolution / System Architecture Evolution (LTE/SAE) networks and fixed and mobile WIMAX networks.

The operation of a communications network domain is typically controlled via/by a domain management system supporting one or several management functions, such as performance, security, fault and configuration management. In the context of mobile communication systems, such as the ones described above, the domain management system is often called Operation Support System (OSS). Some mobile communications networks comprise one OSS for managing the RAN and another OSS for managing the CN, while others comprise a single OSS for managing both the RAN and the CN part of the communications network. The domain management system may in turn be connected to an overall network management system supervising and managing a plurality of network domains.

In mobile communications networks of today, the access network nodes, such as BSs and NodeBs, are configured manually by a network operator, either on site or via/by the OSS. Furthermore, the nodes are managed centrally and hierarchically from the OSS. That is, each time an eNB is installed or rebooted in, or removed from, a mobile network such as a UMTS network, a network operator must manually configure the network accordingly. With the increasing complexity (i.e. size of networks, heterogeneity at all layers of networks, dynamicity of nodes, networks and services) introduced into the future networks, in combination with the wish of the network owners to lower the cost of running the networks, this is a suboptimal way forward.

US 2007/0104173 A1 describes a way to introduce some automatism in the configuration of mobile communications networks with tracking areas. This is achieved by configuring a RAN entity, such as an eNB, with at least one tracking area it is to be associated with, and registering the thus configured RAN entity onto a mobility management function and/or paging coordination function for said tracking area.
Document US2006/203746 A1 relates to an automated configuration process of an access network node of a wireless communications network and discloses a first access network node receiving configuration information, such as neighbor lists and power levels, through a backhaul network from a second access network node and configuring its parameter settings based on the received configuration information.
However, said document is silent on the mechanism to set up a communication between the first and the second access network node via the backhaul network.
Document "On Automatic Neighbour Relation Configuration", 3GPP DRAFT; R3-071819 ANR DISCUSSION, 3RD GENERATION PARTNERSHIP PROJECT (3GPP), Erricsson, relates to automatic neighbour relation configuration in a SAE/LTE communications network. In particular, said document discloses that an access network node, eNodeB, would be able to automatically identify and track neighbour relations with the help of user terminal, UE, measurements. When the eNodeB receives UE measurement reports containing MCI which is not in the Neighbour Relation List for that cell, the eNodeB instructs the UE to read cell information broadcast by other eNodeBs. When the UE has found out the new cell's CIPL, the UE reports the detected information to the eNodeB. The eNodeB uses this information to lookup a transport layer address to the new eNodeB and establishes X2 interface to this eNodeB and updates its neighbour relation list.

This is a small step in the direction of obtaining more self-serving RAN nodes but there is still a desire to make the configuration of RAN nodes in a communications network more efficient and reduce the amount of manual work needed in order for the RAN nodes to be properly configured.

### SUMMARY

It is an object of the present invention to bring some automatism into the configuration process of access nodes in communications networks.

The object is achieved by a method for configuring an access network node in a communications network comprising a first access network node and at least a second access network node, which method comprises the steps of:
- receiving configuration information from said at least second access network node in said first access network node, and
- configuring said first access network node with configuration parameter settings based on said transferred configuration information.

The object is also achieved by an access network node in a communications network, such as an enhanced NodeB (eNB) in a Long Tenn Evolution /System Architecture Evolution (LTE/SAE) network, which node is arranged to
- receive configuration information from at least one second access network node in said network, and
- set configuration parameters for itself based on said received configuration information.

When an access network node according to the invention is introduced and configured into a network, the node is hence able to receive information indicative of the configuration parameters of the neighbouring access network nodes and use said information to automatically set its own configuration parameters. By letting the access network node that needs to be configured set its own configuration parameters based on obtainable configuration settings in its neighbouring nodes, the need for manual input of configuration parameters is eliminated. The invention is also advantageous in that the configuring nodes do not need to look globally for configuration information.

By allowing the access network nodes to take more responsibility for their own situation and the state of their neighbourhood, and act on this knowledge rather than have to go to a network management system, such as an OSS, for every little detail and have the management system tell it how to react and how to be configured, the nodes according to the invention are efficiently configured and managed.

Thus, the present invention provides a more intelligent access network node as compared to previously known access network nodes. This is particularly advantageous in the substantially flatter network architectures of future mobile networks mentioned in the background portion, since the elimination of intermediate nodes existing in networks of today (e.g. BSCs, RNCs, MSCs/VLRs, SGSNs) implies that the intelligence previously built into these nodes now must be distributed among the remaining nodes.

The invention also provides an access network node in a communications network, which node is arranged to participate in the configuration of a second access network node in said network by transferring its configuration parameter settings to said second access network node.

Furthermore, the invention provides a communications network which achieves the above object by comprising at least one of the above described access network nodes.

Further refinements of the method, the access network nodes, and the communications network according to the invention are described in the following detailed description and in the independent claims of the appended claim set.

### BRIEF DESCRIPTION OF THE DRAWINGS

The present invention will become more fully understood from the detailed description provided hereinafter and the accompanying drawings, which are given by way of illustration only, and of which:
Fig. 1 is a schematic view of a network in which the invention may be implemented.
Fig. 2A is a flow chart illustrating the general concept of the configuration method for access network nodes according to the invention.
Fig. 2B is a flow chart illustrating one particular way of carrying out the method illustrated in Fig. 2A.
Fig. 3 is a schematic view of a self-configuring access node utilizing a mobile terminal to obtain information about its neighbouring access nodes.
Fig. 4 is a signalling scheme illustrating one way to implement the invention in a Long Tenn Evolution / System Architecture Evolution (LTE/SAE) network.

### DETAILED DESCRIPTION

In the following description, for purposes of explanation and not limitation, specific details are set forth, such as particular network components and configurations, in order to provide a thorough understanding of the present invention. However, it will be apparent to one skilled in the art that the present invention may be practiced in other embodiments that depart from these specific details. In other instances, detailed descriptions of well-known network components and configurations are omitted so as to not obscure the description of the present invention with unnecessary detail.

The present invention will hereinafter be described in the context of a Long Term Evolution / System Architecture Evolution (LTE/SAE) mobile communications network. It should, however, be appreciated that the invention is applicable also to other types of networks having a similar network configuration and a similar setup of network components, such as WIMAX networks, WiBro networks (Mobile WIMAX), and Ultra Mobile Broadband (UMB) networks.

LTE is a project within the Third Generation Partnership Project (3GPP) of which goal is to develop a future standard for wireless communication based on UMTS but improved to cope with future requirements. SAE is the core network architecture of the LTE network.

The SAE architecture comprises an SAE Gateway (SAE GW) which is the main component of the architecture. The SAE GW in LTE networks replaces the Serving GPRS Support Node (SGSN) and the Gateway GPRS Support Node (GGSN) in UMTS networks and also serves as a generic controller for non-3GPP networks. The SAE GW typically comprises a plurality of subcomponents, such as a Mobility Management Entity (MME), a User Plane Entity (UPE), a 3GPP anchor, and an SAE anchor. Although the MME(s) and the UPE(s) often are called "subcomponents" of the SAE GW, the MME and UPE modules are typically located in a separate node which communicates over an open interface with the SAE GW. The SAE GW node and the MME/UPE node(s) is part of what is sometimes referred to as the Evolved Packet Core (EPC), the SAE Core or the SAE PDU Gateway of the SAE/LTE network. Like other control plane management nodes, the role of the MME is to make sure that user data, i.e. the user plane traffic, can be communicated within the network. It manages and stores the control plane context, handles authentication, authorization etc. The UPE is the corresponding entity of the user plane and serves to manage and store the Mobile Terminal (MT) context, handle ciphering, packet routing and forwarding, etc. The 3GPP anchor manages mobility between 2G/3G and LTE systems, and the SAE anchor manages mobility between 3GPP and non-3GPP systems, such as I-WLAN etc.

Furthermore, when it comes to the Radio Access Network (RAN) of an SAE/LTE network, the NodeBs and the Radio Network Controllers (RNCs) of the UMTS networks have been replaced by a single entity called enhanced NodeB (eNB).

This invention relates to how to control the flow of information in a communications network, such as an SAE/LTE network, when an access network node (e.g. an eNB in an SAE/LTE network) is installed or rebooted in the network. In particular it relates to how to send information between the access network nodes, the control plane management nodes (e.g. MMEs in an SAE/LTE network), and the domain management system (e.g. an Operation Support System (OSS) in an LTE/SAE network) when an access network node is installed or rebooted in order to efficiently configure the access network node so that it can be put into operation.

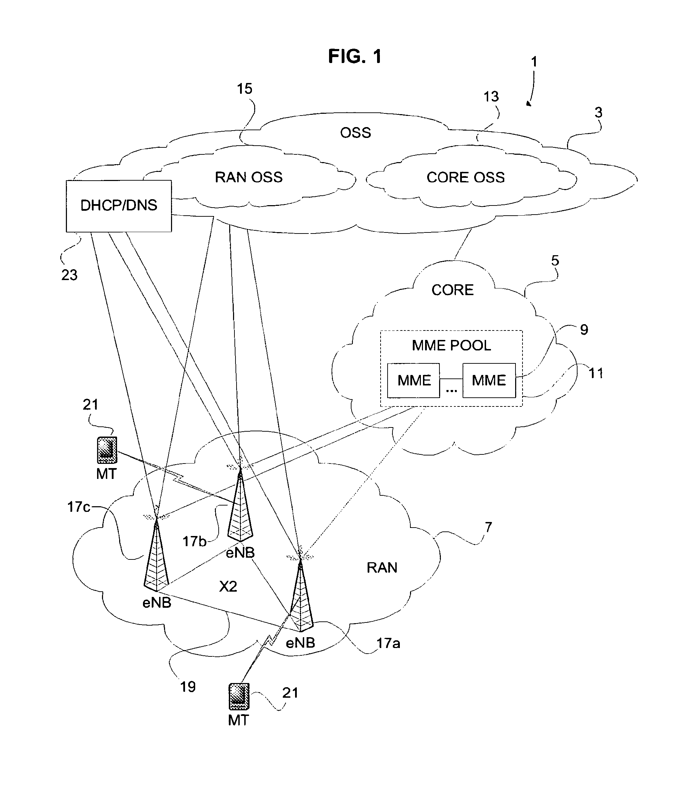

In Fig. 1, an LTE/SAE network 1 and some of its components are shown. The LTE/SAE network is seen to comprise an OSS 3, a Core Network (CN) 5, and a Radio Access Network (RAN) 7.

The OSS 3 is a domain management system supporting one or several management functions in the LTE/SAE network 1, such as fault, performance, security, and configuration functions. The OSS 3 can be seen as the network operator's entrance to the network, through which the operator can change the network configuration by inputting configuration information. The network 1 may comprise one OSS 3 managing both the CN 5 and the RAN 7, or it may comprise one Core OSS 13 for separate management of the CN 5 and one RAN OSS 15 for separate management of the RAN 7. It should be noted that the OSS 3, or the Core OSS 13, often is a part of the CN 5. However, the function of the network 1 is not dependent of whether the OSS 3, or any Core 13 or RAN 15 portion of the OSS 3, resides in the CN 5, the RAN 7 or elsewhere in the network 1. The OSS 3 has therefore been illustrated as a separate part of the network 1 to increase the visibility of the network 1 illustrated in Fig. 1. It should also be understood that the OSS 3 may be arranged to communicate with a higher-level network management system (not shown) which typically is configured to supervise and manage a plurality of network domains, such as the network domain 1.

The CN 5 comprises an MME 9, or a plurality of MMEs 9 connected to each other to form an MME pool 11. The MME(s) 9 is typically also connected to other components of the LTE/SAE network, such as an SAE GW (not shown), and may also be connected to components of other networks, such as a SGSN of a UMTS network (not shown). How the MME(s) fits into an LTE/SAE network and which components it may communicate with are, however, well known in the art and need not be described in detail herein. It is also appreciated that a core network, such as CN 5, typically comprises a plurality of MME pools, such as MME pool 11. As also well known in the art, and as described in the background portion, the CN 5 in general also comprises user plane nodes, such as User Plane Entity (UPE) nodes, that manage the user plane context in the network 1. In Fig. 1, user plane nodes have been omitted so as to not obscure the drawing with unnecessary detail.

The RAN 7 comprises a plurality of eNBs 17a-c. Neighbouring eNBs 17a-c are connected to each other via a communication interface called the X2 interface 19. The X2 interface 19 is sometimes referred to as the "transport connection" and is typically a cable through which the neighbouring eNBs 17a-c can communicate with each other as soon as they are aware of each other's identity, as will be further described below. As well known in the art, each eNB 17a-c covers a cell or a coverage area and is arranged to allow any authorized Mobile Terminal (MT) 21 located within its cell to communicate through the network 1. Each eNB 17a-c is also arranged to communicate with the MME(s) 9. If there is more than one MME 9 forming an MME pool 11, each eNB 17a-c is typically arranged to communicate with all the MMEs 9 in the MME pool 11. Each eNB 17a-c is also arranged to communicate with the OSS 3 and a DHCP/DNS 23 which may or may not be a part of the OSS 3. As well known in the art, the DHCP/DNS (Dynamic Host Configuration Protocol / Domain Name Server) 23 serves to maintain a database for resolving host names and IP addresses, and allocate said host names and IP addresses to the eNBs 17a-c when needed.

When a new eNB is installed into an LTE/SAE network 1, the eNB must be properly configured before it can be used. For example, it must have information about which MME 9 or MME pool 11 it should belong to in order to communicate user data to and from MTs within its cell, which eNBs it is neighbouring in order to handle handovers, what output power, frequencies, timeslots, and codecs to use in order to function in the network, etc. As of today, these parameters must either be manually input directly to the new eNB, or be manually entered into the OSS 3 and forwarded to the new eNB, which brings about a high workload and thus a high cost for the network operator. The same goes for rebooting/reconfiguration of an already existing eNB.

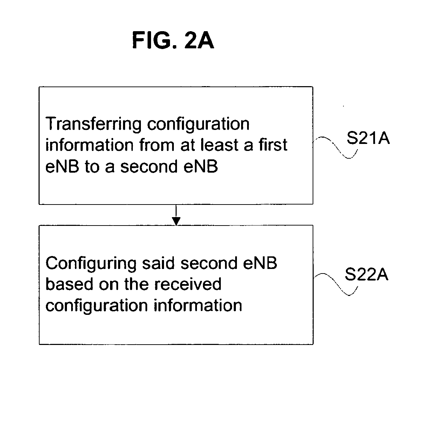

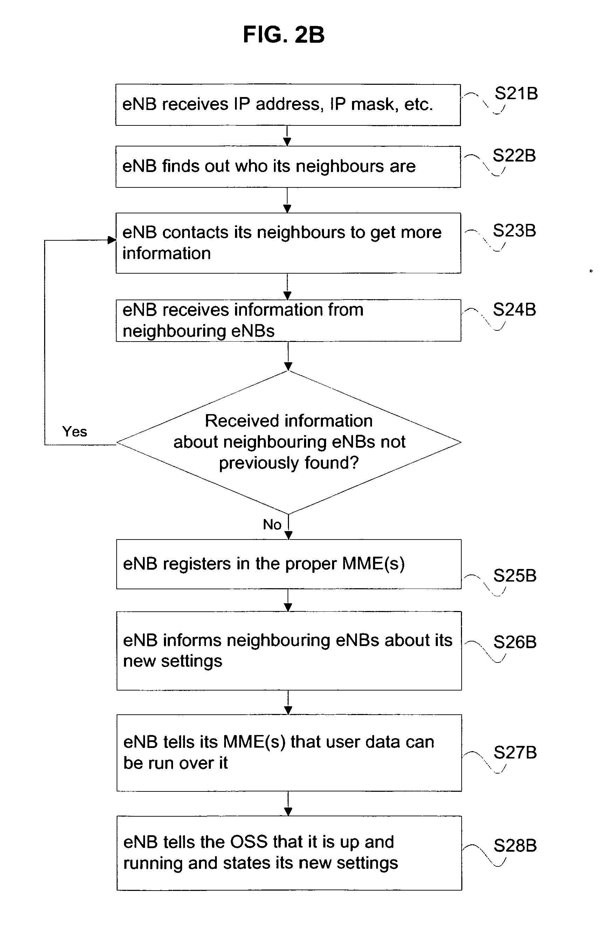

With reference made to Figs. 2A and 2B, a method according to the invention for self-configuring an eNB and thus reduce the demand for manual work in the configuration process will be described. "Self-configuring" should in this context not be construed as if the self-configuring eNB itself performs all the steps necessary to put it into operation, but as it together with the network and the neighbouring nodes can obtain the configuration data needed with no or a minimum of human assistance. When describing Figs. 2A and 2B, reference will at the same time be made to Fig. 1 in which the eNB 17c now should be seen as recently installed on site, or recently rebooted.

In Fig. 2A, the general concept of the eNB configuration method according to the invention is illustrated. In a first step S21A, configuration data is transferred to the newly installed or rebooted eNB 17c from one or several neighbouring eNBs 17a-b. That is, data related to the configuration parameters of said neighbouring nodes 17a-b are transferred to eNB 17c. In step S22A, the eNB 17c is automatically configured with configuration parameters chosen based on the data received from the at least one neighbouring eNB 17a-b in step S21A.

In Fig. 2B, a more detailed flow chart illustrating how the above method may be carried out is shown. The flow chart illustrates the method from the self-configuring eNB's point of view.

In step S21B, which is performed at start-up or reboot of the eNB 17c, the eNB 17c receives parameters allowing it to communicate with other nodes within the LTE/SAE network 1. Typically, the eNB 17c contacts the DHCP/DNS server 23 from which it receives the needed parameters, such as an IP address, IP mask etc. The method then proceeds to step S22B.

In step S22B, the eNB 17c finds out who its neighbouring eNBs 17a-b are. This can be achieved in different ways, which ways will be described further below. The method then proceeds to step S23B.

In step S23B, the eNB 17c adds its neighbouring eNBs 17a-b in its neighbour cell list (sometimes also called neighbour relation list, or neighbour cell set), at least temporarily, and contacts them directly to get more information about the neighbourhood and the network 1 as such. The connections to the neighbouring eNBs are typically established via the X2 interface 19. In step S24B, the eNB 17c receives information relating to the configuration parameters of the neighbouring eNBs via the established connection. The information the eNB 17c receives from each neighbour can be a neighbour cell list over that eNB's neighbours, position data, output power data, frequencies, timeslots, codecs etc., and also what MME(s) 9 and/or MME pool 11 is that neighbour connected to, what other network nodes the neighbour are connected to, for example what Access Gateways (AGWs) it is using, etc. This information will hereinafter be referred to as the configuration information or configuration parameters, and the values of the parameters will be called configuration parameter values or simply configuration settings. The eNB 17c then sets its own configuration parameters based on the configuration parameters received from the neighbouring eNBs 17a-b. If the configuration parameter values received from different neighbouring nodes 17a-b are the same, the self-configuring eNB 17c may for example be arranged to choose the same parameter settings for itself. If for example the configuration information received from two different neighbouring nodes 17a-b indicates that they both belong to the same MME or MME pool, the self-configuring eNB 17c typically registers in the same MME or MME pool, as will be further described below. If the received parameters differ between different neighbours, the self-configuring eNB 17c may comprise logic to process the received parameter values for a particular configuration parameter and chose its own value for that particular parameter based on the result of the processing. If a neighbour cell list received from any neighbouring node 17a-b comprises a node which was not found and identified as a neighbour of the self-configuring eNB 17c in step S22B, the eNB 17c may add that node to its own neighbour cell list, at least temporarily, and try to contact the newly discovered neighbouring eNB, as indicated by the "Yes loop" in the flow chart. Otherwise, the method proceeds to step S25B.

In step S25B, the eNB 17c contacts the proper MME(s) 9 or MME pool 11 and registers by identifying itself and telling the MME/MME pool where it is located and how it fits into the network. The method then proceeds to step S26B.

In step S26B, the eNB 17c once again contacts its neighbours 17a-b and informs or updates them about its configuration parameter settings. The method then proceeds to step S27B.

In step S27B, the eNB 17c once again contacts its MME(s) 9 or MME pool 11 and tells it that it is ready to go to work and that user data can be run over it. The method then proceeds to step S28B.

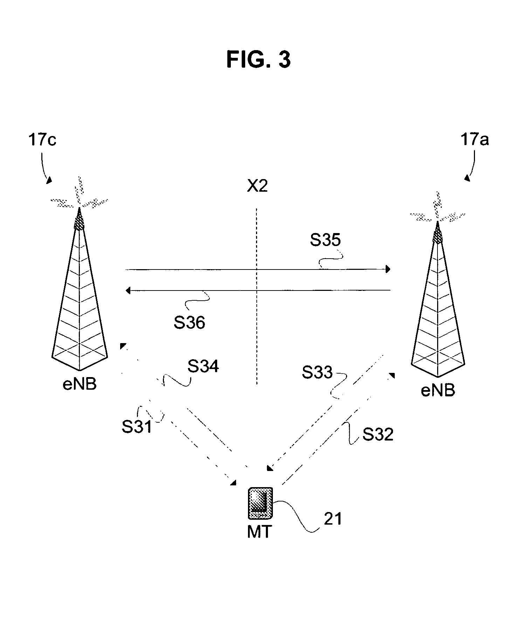

Finally, in step S28B, the eNB 17c contacts the OSS 3 and tells it that the node 17c is up and running. It tells the OSS 3 that it has joined the network 1 and states its current configuration parameter settings and data. Thereby, the self-configuration of the newly installed or rebooted eNB 17c is completed.
After receiving the parameters from e.g. the DHCP/DNS 23 (step S21B), the eNB 17c should hence find out who its neighbours are (step S22B) and start contacting them to get more information (step S23B). In order for the eNB 17c to contact its neighbouring nodes, the eNB 17c must be able to identify them, and in order to identify them the eNB 17c must somehow get node specific information about its neighbouring nodes 17a-b. As mentioned above, there are several ways in which the eNB 17c can find out who its neighbours are. One preferred way of doing so is to use a mobile communication device, i.e. a MT 21, as a source of information. By asking a MT 21 within its cell what other eNBs the MT 21 sees at the same time as it can speak to the eNB 17c, the eNB 17c can receive eNB specific parameters from the MT 21, allowing the eNB 17c to contact the neighbouring eNB(s) directly via the X2 interface 19. One exemplary method for how the eNB 17c can use an MT 21 to obtain the information needed to establish an X2 connection 19 with a neighbouring eNB that is not previously in its neighbour cell list will now be described with reference made to Fig. 3. This method benefits from methods previously described in the co-pending patent application with application number PCT/EP2007/001737, and in the written contribution to the 3GPP meeting SA5#53, 7-11 May 2007, entitled "Discussion on Automatic Neighbour Relation Lists for LTE", S5-070974, available as "S5-070974.zip" at http://www.3gpp.org/ftp/tsg sa/WG5 TM/TSGS5 53/Docs/ (2007-11-22).

Fig. 3 shows a newly installed eNB 17c and a neighbouring eNB 17a. An MT 21 is located in the overlapping portion of the cells or coverage areas of the eNBs 17a and 17c and is thus able to communicate with both nodes 17c, 17a. The MT 21 has an ongoing session served by eNB 17a and is thus "attached" to said eNB 17a. The self-configuring eNB 17c can use the MT 21 to obtain node specific information of the neighbouring eNB 17a. The node specific information may for example be a Cell Identity (CIPL). The CIPL is a Layer 3 identifier (on Public Land Mobile Network (PLMN) level) for a cell and is unique for each cell/eNB, at least within a certain PLMN, but typically within a country or even globally. The CIPL can hence be used by an eNB to address another eNB via the X2 interface. Typically, the CIPL is used in an MT request to a DNS to resolve the IP address of an eNB serving the cell to which the MT is attached. Another term of importance in this context is Measurement Cell Identity (MCI). An MCI is a Layer 2 identifier for a cell and is an integer, not long enough to be unique for a RAN. The MCI corresponds to the WCDMA "scramble code", and each cell in an LTE RAN is assigned a MCI. Typically, the network operator tries to distribute the MCIs in such a way that an eNB has no neighbour with the same MCI as itself, and no eNB has two neighbours with the same MCI. However, one should remember that the MCIs are reused within the RAN and that there is no guarantee that the attempts to distribute the MCIs are successful. It should also be noted that the MCI is part of the Layer 2 information broadcasted to all MTs listening to a cell. That is, an MT doing measurements on a cell will automatically be aware of its MCI. As the CIPL is part of Layer 3, it will not be available to an MT doing measurements on a cell. However, when reaching active state towards a cell, the MT will be aware of the cell's CIPL.

In a first step S31, the self-configuring eNB 17c sends a request to the MT 21, asking it what neighbouring nodes it can see at the moment. In step S32, the MT 21 sends an inquiry about the CIPL and, if desired, the MCI to the neighbouring node eNB 17a. In step S33, the eNB 17a reports its CIPL and additionally its MCI to the MT 21, and in step S34, the MT reports the CIPL and additionally the MCI of the eNB 17a to the eNB 17c. Now the eNB 17c has all the information needed to establish an X2 connection with the neighbouring node 17a. The eNB 17c adds the neighbouring eNB 17a to its neighbour cell list and establishes a connection to it over the X2 interface to retrieve more information about the neighbouring node eNB 17a and the network in which they reside. In step S35, an inquiry is sent from the eNB 17c to the eNB 17a over the X2 interface about the neighbour's position data, output power data, frequencies, timeslots, codecs etc., which MME(s) and/or MME pool it is connected to, what other network component it is connected to, or at least can "see", etc. In step S36, this information is sent from the eNB 17a to the self-configuring eNB 17c over the X2 interface.

It should be appreciated that the X2 connection may as well be established by the neighbouring node. For example, in the first step S31, the eNB 17c can send its CIPL to the MT 21 and instruct the MT 21 to forward the attached CIPL to any other eNB in the neighbourhood, such as the eNB 17a. Upon reception of the CIPL of the newly installed or rebooted node eNB 17c, the neighbouring nodes can establish an X2 connection to the eNB 17c over which the above mentioned information about the neighbours and the network can be transmitted to the eNB 17c. It should also be appreciated that "sending" in the above context does not have to involve an actual transmission of an information carrying signal. So for example in step S32, the MT 21 does not have to communicate anything to the eNB 17a, it may just listen to the eNB's 17a broadcast of its CIPL. It should be noted that any ongoing communication between the MT 21 and an eNB may need to be temporarily interrupted in order for the MT 21 to listen for a cell's broadcast of its CIPL.

The above described method for a self-configuring eNB to find out who its neighbours are requires the presence of an MT that is able to simultaneously communicate with the self-configuring eNB and the nodes from which the eNB needs information. Typically, the self-configuring eNB 17c is configured to listen for MTs attached to at least one other eNB, such as the eNB 17a, for a predetermined time period. If no MT that is attached to another eNB is found during this time period, the output power of the eNB 17c can be stepwise increased to sequentially enlarge the cell or coverage area of the eNB 17c, and thereby increase the overlapping between the cell of eNB 17c and its neighbouring cells. If the eNB 17c still cannot "hear" any MT that is attached to another eNB, the self-configuring eNB 17c is assumed to lack neighbouring nodes.

Another potential way for a self-configuring eNB to find out who its neighbours are is to ask the OSS of the network. The OSS typically comprises a network planning tool or the like for storing and managing information about, e.g., the location of each eNB in the network. By transmitting a generic OSS inquiry call, the self-configuring eNB 17c can establish a connection to the OSS responding to said inquiry, over which connection the OSS can transmit information about the eNBs neighbouring nodes. This method may also be employed to double-check whether a self-configuring eNB that is unable to detect any neighbouring eNBs using an MT, as described above, really lacks neighbouring eNBs. It should, however, be noted that the present invention strives to reduce the need for communication between eNBs and the OSS and that this method using the OSS to obtain information about the neighbours of the self-configuring eNB first and foremost is to be considered a backup or control procedure.

In the above description of Fig. 2B, it was seen that the self-configuring eNB, after receiving the information from its neighbouring eNB(s) (step S24B), contacts the proper MME or MME pool to identify itself and tell the MME where it is located and how it fits into the network (step S25B). The "proper" MME or MME pool is chosen by the self-configuring eNB based on the information received from the neighbouring eNB(s). If the self-configuring eNB receives information from a plurality of neighbouring eNBs in step S24B indicating that they all belong to the same MME or MME pool, it is most likely that the self-configuring eNB itself will belong to that particular MME or MME pool. In such a case, the eNB turns to this MME or MME pool in step S25B. In case the self-configuring eNB only detects one neighbouring eNB from which it can receive information, it is still likely that the eNB will belong to the same MME or MME pool as this one neighbour and it therefore turns to the same MME or MME pool in step S25B. If the neighbours of the self-configuring eNB on the other hand belong to different MMEs or different MME pools, the eNB turns to the respective MMEs/MME pools to ask whether it belongs there or not. When a particular MME or MME pool confirms that the eNB belongs there, the eNB registers in that MME/MME pool in step S25B. If the MMEs/MME pools do not know whether they should host the new or rebooted eNB, or if they all reject it, the eNB turns to the OSS to ask to which MME/MME pool it belongs. If the OSS in turn lacks information about which MME/MME pool the eNB should register in, the eNB simply chooses one of the plurality of MMEs/MME pools in which it registers. In such a case, the choice of MME/MME pool is preferably made on any of the following basis; which MME/MME pool has the largest spare capacity (the eNB is able to ask an MME/ MME pool about its current capacity status) - choosing the MME/MME pool with the largest spare capacity helps avoiding MME/MME pool overload; which MME/MME pool hosts the most neighbouring eNBs - choosing the MME/MME pool hosting most neighbouring eNBs make handover procedures more efficient since handovers between eNBs belonging to the same MME/MME pool can be made directly from one eNB to another (over the X2 interface) while handovers between eNBs belonging to different MMEs/MME pools must be made via the core network; which MME/MME pool is the "closest", meaning either physically closest or network architecturally closest (meaning that the number of intermediate network devices, such as switches, bridges, routers, etc., required for the communication between the eNB and the MME/MME pool is minimized); and/or which MME pool is the biggest, i.e. comprises most separate MMEs.

If the self-configuring eNB does not find any neighbouring eNBs at all in step S22B, it may try to contact the OSS of the network by transmitting a generic OSS inquiry call. Besides information relating to the location of each eNB in the network, the OSS and the OSS network planning tool typically hold information about what MME/MME pool each eNB should belong to. Once the OSS has responded to the self-configuring eNB's inquiry so that a connection can be established, the eNB asks the OSS what MME/MME pool it should register in. If the OSS does not know which MME/MME pool the eNB should register in, the eNB can ask the OSS for a list of all existing MMEs/MME pools in the network and chose to register in any one of them based on the above mentioned selection criterions.

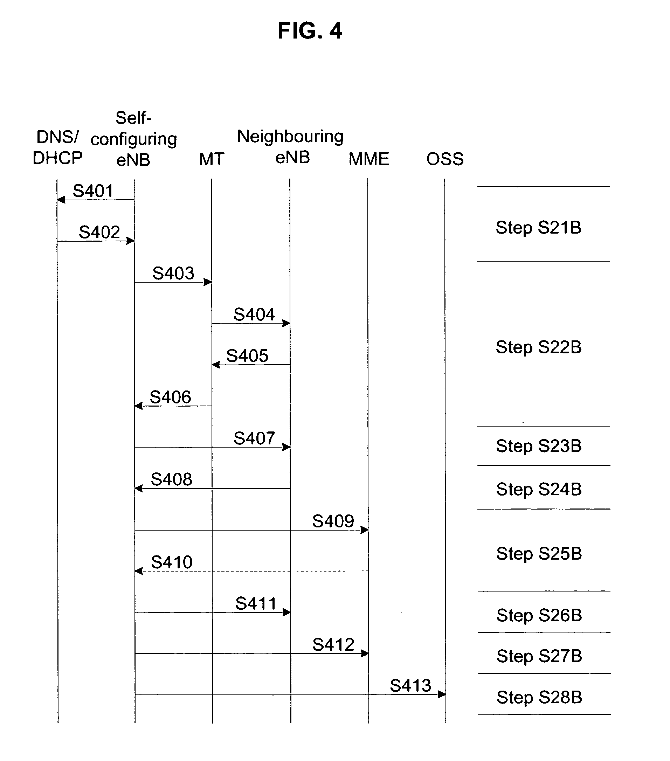

In Fig. 4, a signalling scheme over a preferred way of self-configuration of an eNB in an LTE/SAE network is shown. In this embodiment of the invention, an MT that is able to communicate with both the self-configuring eNB and a neighbouring eNB, as described above, is used in the self-configuration procedure. In the right-hand column of Fig. 4, reference is made to the corresponding method steps described above with reference to Fig. 2B.

In step S401, the self-configuring eNB contacts the DNS/DHCP of the network from which it, in step S402, receives an IP address, IP mask, etc. In step S403, the self-configuring eNB asks an MT within its cell what other neighbouring eNBs it can see. In step S404, the MT contacts a neighbouring eNB with which it is also able to communicate, and asks for its CIPL. In step S405 the neighbouring eNB states its CIPL and additionally its MCI to the MT which, in step S406, forwards the CIPL to the self-configuring eNB. In step S407, the self-configuring eNB establishes an X2 connection with the neighbouring eNB and asks it about its neighbour cell list, personal settings, network components with which it is communicatively connected, etc. In step S408, the neighbouring eNB replies by stating the requested information. The reply in step S408 comprises information about what MME(s) or MME pool the neighbouring eNB is connected to and in step S409, the self-configuring eNB contacts the same MME(s)/MME pool and identifies itself, and tells the MME(s)/MME pool where it is located and how it fits into the network. If the MME(s)/MME pool disapprove to the self-configuring eNB's attempt to register in the particular MME(s)/MME pool, it may, in an additional step S410 illustrated by a dashed line, tell the self-configuring eNB to go to another MME or MME pool and register. In step S411 the self-configuring eNB contacts its neighbouring eNB(s) again and updates it of its new settings. Typically, the self-configuring eNB receives information from not only one but a plurality of neighbouring eNBs in step S407-408. So for example may the self-configuring eNB's neighbour cell list be built up from neighbour cell lists received from a plurality of neighbouring eNBs. Thus, in order for the single neighbouring eNB in the signalling scheme in Fig. 4 to be updated on, e.g. the self-configuring eNB's complete neighbour cell list and what MME/MME pool the self-configuring eNB registered in, it must be updated on this information. It should also be understood that this step may be repeated. First, the self-configuring eNB may inform a first neighbouring eNB about its configuration parameter settings. Later on, the self-configuring eNB can become aware of a previously unknown neighbouring eNB (e.g. through a neighbour cell list received from a second neighbouring eNB) which then may be added to the self-configuring eNB's neighbour cell list. In this case, there is a desire to update said first neighbouring eNB on the self-configuring eNB's neighbour cell list so as to keep all information within the network and the network nodes up to date. When the self-configuring eNB has updated its neighbouring nodes, it once again, in step S412 contacts its MME or MME pool and tells it that it is ready to go to work and that user data can be run over it. Finally, in step S413, the self-configuring eNB contacts the OSS and tells it that the self-configuration process was successful and that the node now is up and running. It tells the OSS that it has joined the network and states its current parameter settings and data, such as its neighbour cell list, position data, output power data, frequencies, timeslots, codecs etc., what MME or MME pool it is connected to and what other network nodes (e.g. AGWs) it can communicate with. Thereby, the self-configuration of the newly installed or rebooted eNB is completed.

It is clear from the above description that one important feature provided the by inventive idea to let an access network node self-configure by setting its configuration parameters based on the configuration parameter settings of its neighbouring access network nodes is to enable for a newly installed or rebooted eNB to self-register in the proper MME or MME pool based on what MMEs or MME pools its neighbouring eNBs are registered in. It should, however, be appreciated that this principle is not limited to MME nodes but that the same principle is applicable to have an access network node self-register in one of a plurality of core network nodes of any particular type. For example, each eNB in an LTE/SAE network is typically also associated with one or several UPE nodes in the core network, and the invention thus also allows a self-configuring eNB to associate itself with the proper UPE node(s) based on what UPE nodes its neighbouring eNBs are associated with.

As mentioned in the introductory portion of the detailed description, although described herein in the context of an LTE/SAE network, the present invention is applicable also to other network types. For example, the invention may be used in fixed and mobile WIMAX networks, and Ultra Mobile Broadband (UMB) networks, to render configuration of new or rebooted nodes more efficient. Although the terminology and to some extent also the functionality of the network components in those network types may differ from those of an LTE/SAE network, a person skilled in the art will be able to identify components/nodes having the same or a similar functionality as the MT, the eNB, the MME and the OSS of an LTE/SAE network in those other network types, and implement the invention accordingly.

With this said, it should be understood that throughout the above detailed description, an MT could be construed as any mobile communication device intended for communication with nodes or other communication devices through a communication network, an eNB could be construed as any access network node arranged to communicate wirelessly with said communication devices, an MME could be construed as any control plane management node handling the control plane context in the network, and the OSS can be construed as any management system for the network or part of the network.

This invention is a key part of building a new, more efficient way of performing network management, where more of the daily details are left to the network itself to manage rather than having a centralized management system (or humans) perform these actions. This invention is based on the idea of having a distributed network management where decisions are taken where the information resides rather than somewhere "higher up" in the hierarchy. Not only will this invention allow the nodes and networks to react quicker and more accurately to changes in the network, it will also lower the required amount of skilled personnel. Throughout the above description, the centralized management system (e.g. the OSS) has been described as a final resort for finding the information needed to properly configure an access network node into the network. Although this is possible in networks of today, it should be understood that this invention is a part of eliminating the need for, or at least diminishing the importance of, centralized network management systems.

It should be appreciated that the inventive way of bringing automatism into the configuration process of radio access nodes disclosed herein can be used not only when an access network node is installed or rebooted. The suggested method through which access network nodes can self-configure by consulting the network and their neighbouring nodes can also be used to update the configuration parameters of access network nodes when any change in the network environment occurs. For example, it can be used when an access network node is removed from the network. By pre-programming the access network nodes in a network to, occasionally or at regular intervals, perform the suggested self-configuring method, their configuration parameters, e.g. their neighbour cell list, can be automatically updated and hence kept up to date without the need of manual reprogramming of the nodes by a network operator.

Although the invention has herein been described with reference to specific embodiments, these descriptions are hence not meant to be construed in a limiting sense. Various modifications of the disclosed embodiments, as well as alternative embodiments of the invention will become apparent to persons skilled in the art upon reference to the description of the invention. It is therefore contemplated that such modifications do not depart from the scope of the invention as set forth in the appended claims.

## Claims

1. A method for configuring an access network node (17c) in a communications network (1) comprising a first access network node (17c) and at least a second neighbouring access network node (17a-b),
comprising the steps of:
- transferring unique identification information associated with any one of said first (17c) or at least second (17a-b) access network node to the other one of said first (17c) and at least second (17a-b) access network node via a mobile terminal (21) which is able to communicate with both the first (17c) and the at least second (17a-b) access network node;
- establishing a direct connection (19) between said first (17c) and said at least second (17b-c) access network node by using said unique identification information;
- receiving, via the established direct connection (19), configuration information from said at least second access network node (17a-b) in said first access network node (17c), and
- configuring said first access network node (17c) with configuration parameter settings based on said transferred configuration information.

2. A configuration method according to claim 1, wherein said direct connection (19) between said first (17c) and said at least second (17b-c) access network node is a direct connection over an X2 interface.

3. A configuration method according to any of the preceding claims, wherein said configuration information comprises information about which of a plurality of core network nodes (9; 11) of a particular type said at least second access network node belongs to, and the step of configuring the first access network node (17c) comprises the step of registering said first access network node (17c) in the same core network node (9; 11).

4. A configuration method according to claim 3, wherein said core network node (9; 11) is a control plane management node, such as a Mobility Management Entity [MME] or an MME pool.

5. A configuration method according to any of the preceding claims, wherein said configuration information comprises a neighbour cell list of neighbouring access network nodes of said at least second access network node (17a-b), and the step of configuring the first access network node (17c) comprises the step of adding at least one of the access network nodes in said neighbour cell list in a neighbour cell list of said first access network node (17c).

6. A configuration method according to any of the preceding claims, further comprising the step of:
- informing and/or updating neighbouring access network nodes (17a-b) with the configuration parameters of the first access network node (17c) after configuring said first access network node (17c).

7. A configuration method according to claim 3 or 4 or any of claims 5 or 6 when dependent on claim 3 or 4, further comprising the step of:
- notifying said core network node (9; 11) that said first access network node (17c) is ready to be put into operation.

8. A configuration method according to any of the preceding claims, further comprising the step of:
- informing a management system (3, 13, 15) for said telecommunication system about the configuration parameters of said first access network node (17c).

9. A first access network node (17c) in a communication network (1) comprising at least a second access network node (17a-b), **characterized in that** said first access network node (17c) is arranged to
- receive unique identification information associated with said at least second access network node (17a-b) from said at least second access network node (17a-b), via a mobile terminal (21) which is able to communicate with both the first access network node (17c) and the at least second (17a-b) access network node;
- establish a direct connection (19) to said at least second access network node (17a-b) by using said unique identification information;
- receive, via the established direct connection (19), configuration information from said at least second access network node (17a-b), and
- set configuration parameters for said first access network node (17c) based on said received configuration information.

10. A first access network node (17c) in a communication network (1) comprising at least a second access network node (17a-b), **characterized in that** said first access network node (17c) is arranged to
- send unique identification information associated with said first access network node (17c) to said at least second access network node (17a-b), via a mobile terminal (21) which is able to communicate with both the first access network node (17c) and the at least second (17a-b) access network node;
- allow said at least second access network node (17a-b) to establish a direct connection (19) to said at least first access network node (17c) by using said unique identification information;
- receive, via the established direct connection (19), configuration information from said at least second access network node (17a-b), and
- set configuration parameters for said first access network node (17c) based on said received configuration information.

11. A first access network node (17c) according to claim 9 wherein said first access network node (17c) is arranged to establish said direct connection (19) to the at least second access network node (17a-b) over an X2 interface.

12. A first access network node (17c) according to any of the claims 9 to 11, wherein said first access network node (17c) is further arranged to chose a core network node (9; 11) based on the received configuration information, if said received configuration information comprises information about which of a plurality of core network nodes (9; 11) of a particular type the at least second access network node (17a-b) belongs to, and register in said chosen core network node (9; 11).

13. A first access network node (17c) according to claim 12, said first access network node (17c) being arranged to chose a control plane management node (9; 11), such as an MME or MME pool, based on the received configuration information, and register in said chosen control plane management node (9; 11), if said received configuration information comprises information about what control plane management node (9; 11) the at least second access network node (17a-b) belongs to.

14. A first access network node (17c) according to any of the claims 9 to 13, wherein said first access network node (17c) further is arranged to chose one or more access network nodes based on the received configuration information, if said received configuration information comprises a neighbour cell list of neighbouring access network nodes of said at least second access network node (17a-b), and at least temporarily add said chosen access network node(s) in a neighbour cell list of its own.

15. A first access network node (17c) according to any of the claims 9 to 14, wherein said first access network node (17c) further is arranged to inform and/or update at least one neighbouring access network node (17a-b) on its configuration parameter settings.

16. A first access network node (17c) according to claim 12 or 13, or claim 14 or 15 when dependent on claim 12 or 13, wherein said first access network node (17c) further is arranged to notify said core network node (9; 11) that it is ready to be put into operation.

17. A first access network node (17c) according to any of the claims 9 to 16, wherein said first access network node (17c) further is arranged to inform and/or update a management system (3, 13, 15) for said communications network) (1) on its configuration parameter settings.

18. A communications network (1), **characterized in that** said communications network (1) comprises a first access network node (17c) according to any of the claims 9 to 17.

19. A communications network (1) according to claim 18, further comprising a second access network node (17a-b) arranged to participate in the configuration of said first access network node (17c) by sending information relating to the configuration parameter settings of said second access network node (17a-b) to said first access network node (17c) via a direct connection (19) to said first access network node (17c).

20. A communications network (1) according to any of claim 18 or 19, wherein said communications network (1) is an LTE/SAE network and said access network node(s) (17a-c) is an enhanced Node B [eNB].

## Patentansprüche

1. Verfahren zum Konfigurieren eines Zugangsnetzwerkknotens (17c) in einem Kommunikationsnetzwerk (1), umfassend einen ersten Zugangsnetzwerkknoten (17c) und wenigstens einen zweiten Nachbar-Zugangsnetzwerkknoten (17a-b), umfassend die Schritte:
- Übermitteln einer eindeutigen Identifikationsinformation assoziiert mit dem ersten (17c) oder dem wenigstens zweiten (17a-b) Zugangsnetzwerkknoten an den anderen von den ersten (17c) und wenigstens zweiten (17a-b) Zugangsnetzwerkknoten über ein mobiles Endgerät (21), das in der Lage ist, mit sowohl dem ersten (17c) als auch dem wenigstens zweiten (17a-b) Zugangsnetzwerkknoten zu kommunizieren;
- Aufbauen einer direkten Verbindung (19) zwischen dem ersten (17c) und dem wenigstens zweiten (17b-c) Zugangsnetzwerkknoten unter Verwendung der eindeutigen Identifikationsinformation;
- Empfangen, über die aufgebaute direkte Verbindung (19), einer Konfigurationsinformation von dem wenigstens zweiten Zugangsnetzwerkknoten (17a-b) in dem ersten Zugangsnetzwerkknoten (17c),
- Konfigurieren des ersten Zugangsnetzwerkknotens (17c) mit Konfigurationsparametereinstellungen basierend auf der übermittelten Konfigurationsinformation.

2. Konfigurationsverfahren nach Anspruch 1, wobei die direkte Verbindung (19) zwischen den ersten (17c) und wenigstens zweiten (17b-c) Zugangsnetzwerkknoten eine direkte Verbindung über eine X2-Schnittstelle ist.

3. Konfigurationsverfahren nach einem der vorhergehenden Ansprüche, wobei die Konfigurationsinformation Information darüber umfasst, zu welcher einer Vielzahl von Kernnetzwerkknoten (9; 11) eines bestimmten Typs der wenigstens zweiten Zugangsnetzwerkknoten gehört und der Schritt zum Konfigurieren des ersten Zugangsnetzwerkknotens (17c) den Schritt umfasst zum Registrieren des ersten Zugangsnetzwerkknotens (17c) in dem gleichen Kernnetzwerkknoten (9; 11).

4. Konfigurationsverfahren nach Anspruch 3, wobei der Kernnetzwerkknoten (9; 11) ein Steuerebenen-Verwaltungsknoten ist, wie zum Beispiel eine Mobility-Management-Entity [MME] oder ein MME-Pool.

5. Konfigurationsverfahren nach einem der vorhergehenden Ansprüche, wobei die Konfigurationsinformation eine Nachbarzellenliste von Nachbar-Zugangsnetzwerkknoten des wenigstens zweiten Zugangsnetzwerkknotens (17a-b) umfasst und der Schritt zum Konfigurieren des ersten Zugangsnetzwerkknotens (17c) den Schritt umfasst zum Hinzufügen wenigstens eines der Zugangsnetzwerkknoten in der Nachbarzellenliste in eine Nachbarzellenliste des ersten Zugangsnetzwerkknotens (17c).

6. Konfigurationsverfahren nach einem der vorhergehenden Ansprüche, weiterhin den Schritt umfassend:
- Informieren und/oder Aktualisieren von Nachbar-Zugangsnetzwerkknoten (17a-b) mit den Konfigurationsparametern des ersten Zugangsnetzwerkknotens (17c) nach Konfigurieren des ersten Zugangsnetzwerkknotens (17c).

7. Konfigurationsverfahren nach einem der Ansprüche 3 oder 4 oder einem der Ansprüche 5 oder 6, wenn abhängig von Anspruch 3 oder 4, weiterhin den Schritt umfassend:
- Benachrichtigen des Kernnetzwerkknotens (9; 11), dass der erste Zugangsnetzwerkknoten (17c) bereit ist, in Betrieb genommen zu werden.

8. Konfigurationsverfahren nach einem der vorhergehenden Ansprüche, weiterhin umfassend den Schritt:
- Informieren eines Verwaltungssystems (3, 13, 15) für das Telekommunikationssystem über die Konfigurationsparameter des ersten Zugangsnetzwerkknotens (17c).

9. Ein erster Zugangsnetzwerkknoten (17c) in einem Kommunikationsnetzwerk (1), umfassend wenigstens einen zweite Zugangsnetzwerkknoten (17a-b), **dadurch gekennzeichnet, dass** der erste Zugangsnetzwerkknoten (17c) eingerichtet ist
- eine eindeutige Identifikationsinformation assoziiert mit dem wenigstens zweiten Zugangsnetzwerkknoten (17a-b) von dem wenigstens zweiten Zugangsnetzwerkknoten (17a-b) zu empfangen, mittels eines mobilen Endgeräts (21), das in der Lage ist, mit sowohl dem ersten Zugangsnetzwerkknoten (17c) als auch dem wenigstens zweiten (17a-b) Zugangsnetzwerkknoten zu kommunizieren;
- eine direkte Verbindung (19) zu dem wenigstens zweiten Zugangsnetzwerkknoten (17a-b) unter Verwendung der eindeutigen Identifikationsinformation aufzubauen;
- Konfigurationsinformation, über die aufgebaute direkte Verbindung (19), von dem wenigstens zweiten Zugangsnetzwerkknoten (17a-b) zu empfangen, und
- Konfigurationsparameter für dem ersten Zugangsnetzwerkknoten (17c) basierend auf der empfangenen Konfigurationsinformation einzustellen.

10. Ein erster Zugangsnetzwerkknoten (17c) in einem Kommunikationsnetzwerk (1), umfassend wenigstens einen zweiten Zugangsnetzwerkknoten (17a-b), **dadurch gekennzeichnet, dass** der erste Zugangsnetzwerkknoten (17c) eingerichtet ist,
- eindeutige Identifikationsinformation assoziiert mit dem ersten Zugangsnetzwerkknoten (17c) an den wenigstens zweiten Zugangsnetzwerkknoten (17a-b) zu senden, über ein mobiles Endgerät (21), das in der Lage ist, mit sowohl dem ersten Zugangsnetzwerkknoten (17c) als auch dem wenigstens zweiten (17a-b) Zugangsnetzwerkknoten zu kommunizieren;
- es dem wenigstens zweiten Zugangsnetzwerkknoten (17a-b) zu erlauben, eine direkte Verbindung (19) zu dem wenigstens ersten Zugangsnetzwerkknoten (17c) unter Verwendung der eindeutigen Identifikationsinformation aufzubauen;
- Konfigurationsinformation, über die aufgebaute direkte Verbindung (19), von dem wenigstens zweiten Zugangsnetzwerkknoten (17a-b) zu empfangen, und
- Konfigurationsparameter für den ersten Zugangsnetzwerkknoten (17c) basierend auf der empfangenen Konfigurationsinformation einzustellen.

11. Ein erster Zugangsnetzwerkknoten (17c) nach Anspruch 9, wobei der erste Zugangsnetzwerkknoten (17c) eingerichtet ist, eine direkte Verbindung (19) zu dem wenigstens zweiten Zugangsnetzwerkknoten (17a-b) über eine X2-Schnittstelle aufzubauen.

12. Ein erster Zugangsnetzwerkknoten (17c) nach einem der Ansprüche 9 bis 11, wobei der ersten Zugangsnetzwerkknoten (17c) weiterhin eingerichtet ist, einen Kernnetzwerkknoten (9; 11) basierend auf der empfangenen Konfigurationsinformation auszuwählen, falls die empfangene Konfigurationsinformation Information darüber umfasst, zu welcher einer Vielzahl von Kernnetzwerkknoten (9; 11) eines bestimmten Typs der wenigstens zweite Zugangsnetzwerkknoten (17a-b) gehört, und in dem ausgewählten Kernnetzwerkknoten (9; 11) zu registrieren.

13. Ein erster Zugangsnetzwerkknoten (17c) nach Anspruch 12, wobei der erste Zugangsnetzwerkknoten (17c) eingerichtet ist, einen Steuerebenen-Verwaltungsknoten (9; 11), wie zum Beispiel eine MME oder einen MME-Pool, basierend auf der empfangenen Konfigurationsinformation auszuwählen, und sich in dem ausgewählten Steuerebenen-Verwaltungsknoten (9; 11) zu registrieren, falls die empfangene Konfigurationsinformation Information darüber umfasst, zu welchem Steuerebenen-Verwaltungsknoten (9; 11) der wenigstens zweite Zugangsnetzwerkknoten (17a-b) gehört.

14. Ein erster Zugangsnetzwerkknoten (17c) nach einem der Ansprüche 9 bis 13, wobei der erste Zugangsnetzwerkknoten (17c) weiterhin eingerichtet ist, einen oder mehrere Zugangsnetzwerkknoten basierend auf der empfangenen Konfigurationsinformation auszuwählen, falls die empfangene Konfigurationsinformation eine Nachbarzellenliste von Nachbar-Zugangsnetzwerkknoten des wenigstens zweiten Zugangsnetzwerkknotens (17a-b) umfasst und wenigstens temporär den(die) ausgewählten Zugangsnetzwerkknoten einer eigenen Nachbarzellenliste hinzuzufügen.

15. Ein erster Zugangsnetzwerkknoten (17c) nach einem der Ansprüche 9 bis 14, wobei der erste Zugangsnetzwerkknoten (17c) weiterhin eingerichtet ist, wenigstens einen Nachbar-Zugangsnetzwerkknoten (17a-b) über seine Konfigurationsparametereinstellungen zu informieren und/oder zu aktualisieren.

16. Ein erster Zugangsnetzwerkknoten (17c) nach einem der Ansprüche 12 oder 13, oder 14 oder 15, wenn abhängig von Anspruch 12 oder 13, wobei der erste Zugangsnetzwerkknoten (17c) weiterhin eingerichtet ist, den Kernnetzwerkknoten (9; 11) zu benachrichtigen, dass er bereit ist, in Betrieb gesetzt zu werden.

17. Ein erster Zugangsnetzwerkknoten (17c) nach einem der Ansprüche 9 bis 16, wobei der erste Zugangsnetzwerkknoten (17c) weiterhin eingerichtet ist, ein Verwaltungssystem (3, 13, 15) für das Kommunikationsnetzwerk (1) über seine Konfigurationsparametereinstellungen zu informieren und/oder zu aktualisieren.

18. Ein Kommunikationsnetzwerk (1), das **dadurch gekennzeichnet ist, dass** das Kommunikationsnetzwerk (1) einen ersten Zugangsnetzwerkknoten (17c) nach einem der Ansprüche 9 bis 17 umfasst.

19. Ein Kommunikationsnetzwerk (1) nach Anspruch 18, weiterhin umfassend einen zweiten Zugangsnetzwerkknoten (17a-b), der eingerichtet ist, an der Konfiguration des ersten Zugangsnetzwerkknotens (17c) teilzunehmen durch Senden einer Information, die sich auf die Konfigurationsparametereinstellungen des zweiten Zugangsnetzwerkknotens (17a-b) bezieht, an den ersten Zugangsnetzwerkknoten (17c) über eine direkte Verbindung (19) zu dem ersten Zugangsnetzwerkknoten (17c).

20. Ein Kommunikationsnetzwerk (1) nach einem der Ansprüche 18 oder 19, wobei das Kommunikationsnetzwerk (1) ein LTE/SAE-Netzwerk ist und der(die) Zugangsnetzwerkknoten (17a-c) ein enhanced NodeB [eNB] ist.

## Revendications

1. Procédé de configuration d'un noeud de réseau d'accès (17c) dans un réseau de communication (1) comprenant un premier noeud de réseau d'accès (17c) et au moins un second noeud de réseau d'accès adjacent (17a-b), comprenant les étapes consistant à :
- transférer des informations d'identification uniques associées à un noeud quelconque parmi lesdits premier (17c) et au moins un second (17a-b) noeuds de réseau d'accès vers l'autre noeud parmi lesdits premier (17c) et au moins un second (17a-b) noeuds de réseau d'accès, via un terminal mobile (21) qui est en mesure de communiquer avec à la fois ledit premier (17c) et ledit au moins un second (17a-b) noeud de réseau d'accès ;
- établir une connexion directe (19) entre ledit premier (17c) et ledit au moins un second (17a-b) noeud de réseau d'accès en utilisant lesdites informations d'identification uniques ;
- recevoir, sur ledit premier noeud de réseau d'accès (17c), via la connexion directe (19) établie, des informations de configuration provenant dudit au moins un second noeud de réseau d'accès (17a-b) ; et
- configurer ledit premier noeud de réseau d'accès (17c) à l'aide de valeurs de paramètres de configuration qui sont fondées sur lesdites informations de configuration transférées.

2. Procédé de configuration selon la revendication 1, dans lequel ladite connexion directe (19) entre ledit premier noeud de réseau d'accès (17c) et ledit au moins un second noeud de réseau d'accès (17b-c) est une connexion directe sur une interface X2.

3. Procédé de configuration selon l'une quelconque des revendications précédentes, dans lequel lesdites informations de configuration comprennent des informations sur les noeuds d'un type particulier, parmi une pluralité de noeuds de réseau d'interconnexion (9 ; 11), auxquels appartient ledit au moins un second noeud de réseau d'accès et l'étape de configuration du premier noeud de réseau d'accès (17c) comprend l'étape consistant à enregistrer ledit premier noeud de réseau d'accès (17c) auprès du même noeud de réseau d'interconnexion (9 ; 11).

4. Procédé de configuration selon la revendication 3, dans lequel ledit noeud de réseau d'interconnexion (9 ; 11) est un noeud de gestion du sous-système de commande, tel qu'une entité de gestion de la mobilité (MME) ou un pool d'entités MME.

5. Procédé de configuration selon l'une quelconque des revendications précédentes, dans lequel lesdites informations de configuration comprennent une liste de cellules voisines composée des noeuds de réseau d'accès voisins dudit au moins un second noeud de réseau d'accès (17a-b) et l'étape de configuration du premier noeud de réseau d'accès (17c) comprend l'étape consistant à ajouter au moins un des noeuds de réseau d'accès de ladite liste de cellules voisines dans une liste de cellules voisines dudit premier noeud de réseau d'accès (17c).

6. Procédé de configuration selon l'une quelconque des revendications précédentes, comprenant en outre l'étape consistant à :
- informer et/ou mettre à jour des noeuds de réseau d'accès voisins (17a-b) en fournissant les paramètres de configuration du premier noeud de réseau d'accès (17c), après la configuration dudit premier noeud de réseau d'accès (17c).

7. Procédé de configuration selon la revendication 3 ou 4, ou selon l'une quelconque des revendications 5 et 6 lorsque celles-ci dépendent de la revendication 3 ou 4, comprenant en outre l'étape consistant à :
- informer ledit noeud de réseau d'interconnexion (9 ; 11) que ledit premier noeud de réseau d'accès (17c) est prêt à être mis en service.

8. Procédé de configuration selon l'une quelconque des revendications précédentes, comprenant en outre l'étape consistant à :
- informer un système de gestion (3, 13, 15) dudit système de télécommunication des paramètres de configuration dudit premier noeud de réseau d'accès (17c).

9. Premier noeud de réseau d'accès (17c) d'un réseau de communication (1) comprenant au moins un second noeud de réseau d'accès (17a-b), **caractérisé en ce que** ledit premier noeud de réseau d'accès (17c) est conçu pour:
- recevoir des informations d'identification uniques associées audit au moins un second noeud de réseau d'accès (17a-b), en provenance dudit au moins un second noeud de réseau d'accès (17a-b), via un terminal mobile (21) qui est en mesure de communiquer avec à la fois ledit premier noeud de réseau d'accès (17c) et ledit au moins un second noeud de réseau d'accès (17a-b) ;
- établir une connexion directe (19) avec ledit au moins un second noeud de réseau d'accès (17a-b) en utilisant lesdites informations d'identification uniques ;
- recevoir, via la connexion directe (19) établie, des informations de configuration provenant dudit au moins un second noeud de réseau d'accès (17a-b) ; et
- renseigner des paramètres de configuration dudit premier noeud de réseau d'accès (17c) en se fondant sur lesdites informations de configuration transférées.

10. Premier noeud de réseau d'accès (17c) d'un réseau de communication (1) comprenant au moins un second noeud de réseau d'accès (17a-b), **caractérisé en ce que** ledit premier noeud de réseau d'accès (17c) est conçu pour :
- envoyer des informations d'identification uniques associées audit premier noeud de réseau d'accès (17c) audit au moins un second noeud de réseau d'accès (17a-b), via un terminal mobile (21) qui est en mesure de communiquer à la fois avec le premier noeud de réseau d'accès (17c) et avec ledit au moins un second noeud de réseau d'accès (17a-b) ;
- autoriser ledit au moins un second noeud de réseau d'accès (17a-b) à établir une connexion directe (19) avec ledit au moins un premier noeud de réseau d'accès (17c) en utilisant lesdites informations d'identification uniques ;
- recevoir, via la connexion directe (19) établie, des informations de configuration provenant dudit au moins un second noeud de réseau d'accès (17a-b) ; et
- renseigner des paramètres de configuration pour ledit premier noeud de réseau d'accès (17c) en se fondant sur lesdites informations de configuration reçues.

11. Premier noeud de réseau d'accès (17c) selon la revendication 9, dans lequel ledit premier noeud de réseau d'accès (17c) est conçu pour établir ladite connexion directe (19) avec ledit au moins un second noeud de réseau d'accès (17a-b) sur une interface X2.

12. Premier noeud de réseau d'accès (17c) selon l'une quelconque des revendications 9 à 11, dans lequel ledit premier noeud de réseau d'accès (17c) est en outre conçu pour choisir un noeud de réseau d'interconnexion (9 ; 11) en fonction des informations de configuration reçues si lesdites informations de configuration reçues comprennent des informations sur les noeuds d'un type particulier, parmi une pluralité de noeuds de réseau d'interconnexion (9 ; 11) auxquels appartient ledit au moins un second noeud de réseau d'accès (17a-b) et pour s'enregistrer auprès dudit noeud de réseau d'interconnexion (9 ; 11) choisi.

13. Premier noeud de réseau d'accès (17c) selon la revendication 12, dans lequel ledit premier noeud de réseau d'accès (17c) est conçu pour choisir un noeud de gestion du sous-système de commande (9 ; 11), tel qu'une entité MME ou un pool d'entités MME, en fonction des informations de configuration reçues, et pour s'enregistrer auprès dudit noeud de gestion du sous-système de commande (9, 11), si lesdites informations de configuration reçues comprennent des informations sur le noeud de gestion du sous-système de commande (9, 11) auquel appartient ledit au moins un second noeud de réseau d'accès (17a-b).

14. Premier noeud de réseau d'accès (17c) selon l'une quelconque des revendications 9 à 13, dans lequel ledit premier noeud de réseau d'accès (17c) est en outre conçu pour choisir un ou plusieurs noeuds de réseau d'accès en fonction des informations de configuration reçues, si lesdites informations de configuration reçues comprennent une liste de cellules voisines contenant des noeuds de réseau d'accès voisins dudit au moins un second noeud de réseau d'accès (17a-b), et pour au moins ajouter temporairement le ou les noeuds de réseau d'accès choisis dans sa propre liste de cellules voisines.

15. Premier noeud de réseau d'accès (17c) selon l'une quelconque des revendications 9 à 14, dans lequel ledit premier noeud de réseau d'accès (17c) est conçu en outre pour informer et/ou mettre à jour au moins un noeud de réseau d'accès voisin (17a-b) sur ses paramètres de configuration.

16. Premier noeud de réseau d'accès (17c) selon la revendication 12 ou 13, ou selon la revendication 14 ou 15 lorsque celles-ci dépendent de la revendication 12 ou 13, dans lequel ledit premier noeud de réseau d'accès (17c) est conçu en outre pour informer ledit noeud de réseau d'interconnexion (9 ; 11) qu'il est prêt à être mis en service.

17. Premier noeud de réseau d'accès (17c) selon l'une quelconque des revendications 9 à 16, dans lequel ledit premier noeud de réseau d'accès (17c) est en outre conçu pour informer et/ou mettre à jour un système de gestion (3, 13, 15) dudit réseau de communication (1) sur ses propres valeurs des paramètres de configuration.

18. Réseau de communication (1), **caractérisé en ce que** ledit réseau de communication (1) comprend un premier noeud de réseau d'accès (17c) selon l'une quelconque des revendications 9 à 17.

19. Réseau de communication (1) selon la revendication 18, comprenant en outre un second noeud de réseau d'accès (17a-b) conçu pour participer à la configuration dudit premier noeud de réseau d'accès (17c) en envoyant des informations intéressant les valeurs des paramètres de configuration dudit second noeud de réseau d'accès (17a-b) audit premier noeud de réseau d'accès (17c), via une connexion directe (19) avec ledit premier noeud de réseau d'accès (17c).

20. Réseau de communication (1) selon la revendication 18 ou 19, dans lequel ledit réseau de communication (1) est un réseau LTE/SAE et lesdits noeuds de réseau d'accès (17a-c) sont des noeuds B améliorés (eNB).
